# EUROPÄISCHE PATENTSCHRIFT

(11) **EP 0 389 897 B1**
(45) Veröffentlichungstag und Bekanntmachung des Hinweises auf die Patenterteilung: **01.09.1993**
(21) Anmeldenummer: 90105050.0
(22) Anmeldetag: 17.03.1990
(51) Int. Cl.: B23D 15/04, B23K 26/00, B23K 101/16

(54) **Bandschweissanlage**
Equipment for welding of bands
Installation de sondage de bandes

(30) Priorität: 25.03.1989 DE 3909925
(43) Veröffentlichungstag der Anmeldung: 03.10.1990
(73) Patentinhaber: Oxytechnik Ges. für Systemtechnik mbH, 65760 Eschborn (DE)
(72) Erfinder: Bauer, Helmut, D-6367 Karben 6 (DE)
(74) Vertreter: Berdux, Klaus (DE)

(56) Entgegenhaltungen:
- EP-A- 0 139 013
- DE-C- 3 044 350
- FR-A- 1 368 543
- GB-A- 780 674
- US-A- 3 816 696

## Beschreibung

Die Erfindung betrifft eine Bandschweißanlage nach dem Oberbegriff des Anspruches 1.

In Bandschweißanlagen werden beliebig lange Bänder durch Aneinanderschweißen von Blechen, Platinen, Bändern für einen kontinuierlichen Arbeitsprozeß in Walzwerken oder in Walzband verarbeitenden Industrien hergestellt. Spannen, Ausrichten, Schneiden, Schweißen werden von ein und derselben Anlage erledigt.

Aus der DE-PS 16 27 555 ist es bekannt, die beiden Bandenden gleichzeitig mit einer doppelschnittig arbeitenden Schere zu beschneiden. Zwei Vertikalbalken tragen die an einem oberen Scherbalken angeordneten Schermesser. Die Vertikalbalken bewegen sich in einstellbaren Gleitführungen. Die Auf- und Abwärtsbewegungen der Schermesser erfolgt durch zwei hydraulisch betätigte Stellzylinder, die über ein an den Endpunkten der Balken angreifendes Hebelsystem mit der Schere verbunden sind.

Durch den rahmenförmigen Halter dieser bekannten Schere ist ein großer hydraulischer und mechanischer Aufwand beim Schneiden erforderlich. So müssen beispielsweise die Stellzylinder für lange Hubwege und große Hydraulikdrücke ausgelegt werden. Der Arbeitsraum wird bei in Oberlage angeordneter Schere durch den auf die Bandenden gerichteten untersten Anschnittpunkt der Schere bestimmt. Dies führt in Verbindung mit den Vertikalbalken zu einer großen Bauhöhe der Bandschweißanlage.

Diese Nachteile werden mit einer aus der DE 30 44 350 C3 bekannten Schere vermieden, die an einer Seite schwenkbar mit einem Schlitten verbunden ist, der an einer stationär angeordneten Vertikalführung mit einem Stellzylinder in der Höhe verschoben werden kann. Die andere Seite der Schere ist frei beweglich in einer zweiten Vertikalführung geführt und zur Erzeugung einer Schneidbewegung ebenfalls mit einem Stellzylinder verbunden. Mit dieser Schere können große Scherkräfte zum Beschneiden von Bandenden bis zu einer Dicke von etwa 12 Millimetern aufgebracht werden. Vorteilhaft wird bei Oberlage der Schere ein großer Arbeitsraum vor und nach dem Beschneiden der Bandenden bei kleiner Maschinenhöhe erreicht.

Es gibt jedoch auch Anwendungsfälle, bei denen Bänder in einem Dickenbereich von ≦ 3 mm beschnitten werden müssen. Deren Bandenden können zwar auch mit der gattungsbildenden Schere nach der DE 30 44 350 C3 beschnitten werden, jedoch ist der hydraulische und mechanische Aufwand für diese Dickenbereiche zu groß. Hinzu kommt, daß aufgrund der hydraulischen und mechanischen Auslegung dieser Schere die Schneidzykluszeit verhältnismäßig hoch ist.

Der Erfindung liegt daher die Aufgabe zugrunde, eine Schere in einer Bandschweißanlage für dünne Bänder zu schaffen, mit der die Schneidzykluszeit verkürzt und der mechanische und hydraulische Aufwand unter Beibehaltung der Vorteile des gattungsbildenden Standes der Technik verringert werden kann.

Ausgehend von dem im Oberbegriff des Anspruches 1 berücksichtigten Stand der Technik ist diese Aufgabe durch die kennzeichnenden Merkmale des Anspruches 1 gelöst.

Vorteilhafte Weiterbildungen der Erfindung sind in den Unteransprüchen angegeben.

Die Erfindung ermöglicht es, im Bedarfsfall nunmehr die Schneidzykluszeit zu halbieren. Dies wird einerseits durch die Ansteuerung von nur einem, vorzugsweise als Hydraulikzylinder ausgebildeten Stellzylinder und eine damit verringerte Anzahl der Ansteuerschritte erreicht; andererseits trägt die in den Ansprüchen genannte konstruktive Ausbildung der Führung des Scherbalkens mit den Schermessern zu der möglichten Verringerung der Schneidzykluszeit aufgrund der leichtgängigen und verkantungsfreien Lagerung wesentlich bei. Dabei können die Herstellkosten verringert werden. Vorteilhaft führt nur ein Stellzylinder die Zustellbewegung, welche die Zugänglichkeit des Arbeitsraumes vor und nach dem Beschneiden der Bandenden ermöglicht und die Schneidbewegung der schwenkbaren Schere aus.

Zweckmäßige Ausgestaltungen sowie weitere Vorteile ergeben sich aus der nachfolgenden Beschreibung eines in der Zeichnung dargestellten Ausführungsbeispieles.

Es zeigen
- Fig. 1: eine Seitenansicht der erfindungsgemäßen Schere in einer Bandschweißanlage
- Fig. 2: eine Ansicht A, der in der Fig. 1 dargestellten Bandschweißanlage
- Fig. 3: eine Schnittdarstellung des Oberjoches nach der Erfindung
- Fig. 4: eine Schnittdarstellung des Führungsschlittens nach der Erfindung

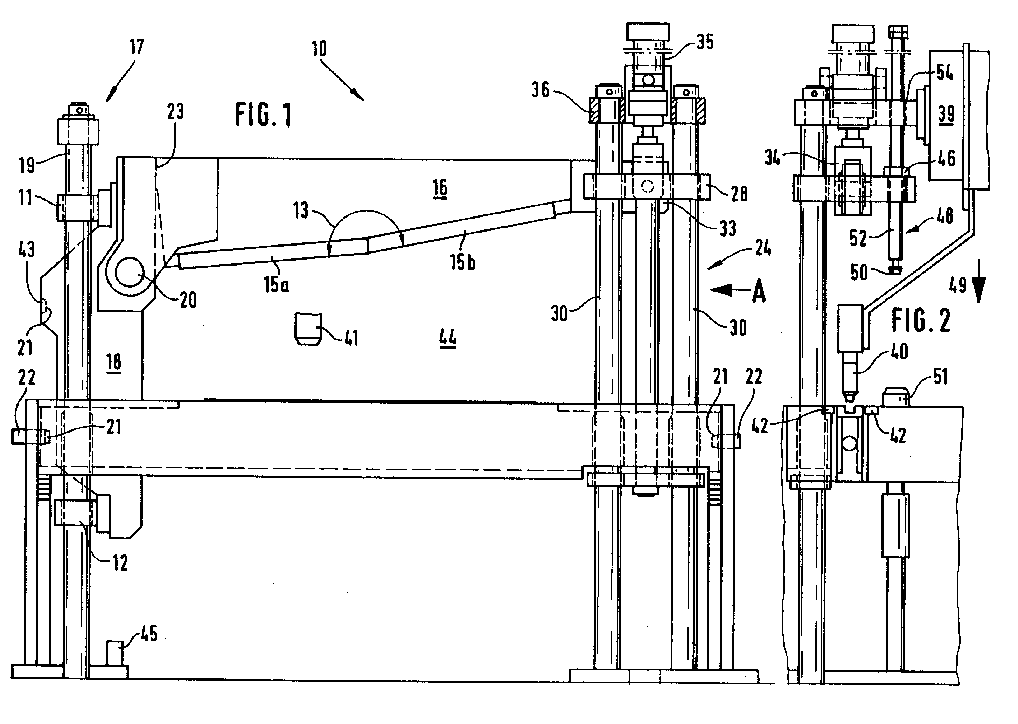

In den Zeichnungen ist eine Bandschweißanlage zum Beschneiden und Zusammenschweißen von zwei Bandenden in ihrer Gesamtheit mit 10 bezeichnet. Zum Beschneiden der Bandenden sind zwei im Abstand voneinander angeordnete, nach unten gerichtete Schermesser 14, 15 vorgesehen. Wie aus der Fig. 1 ersichtlich, sind die Schermesser 14, 15 an einem Scherbalken 16 befestigt. Die Schermesser 14, 15 bestehen jeweils aus zwei gleichlangen Segmenten, von denen in Fig. 1 die Segmente 15a, 15b dargestellt sind. Beim Schneiden der Bandenden wird der Hebelarm der Schere mit zunehmender Schnittlänge kürzer und der Neigungswinkel (Schnittwinkel) verringert sich. Dies führt zur einer Erhöhung der Scherkräfte. Ab etwa Schnittmitte werden die Schnittkräfte vorteilhaft durch die beiden in einem stumpfen Winkel 13 von vorzugsweise 172 bis 176° angeordneten Segmente, die somit einen größeren Neigungswinkel bilden, wieder verringert. Die Lagerseite 17 des Scherbalkens 16 ist mittels eines Bolzens 20 schwenkbar an einem Schlitten 18 befestigt, der seinerseits an einer ersten Vertikalführung 19, die aus zwei nebeneinander angeordneten Rundsäulen besteht, höhenverschiebbar ist. Hierzu sind an dem Schlitten vier Lager 11, 12 vorgesehen.

Die aus der Seitenansicht der Fig. 1 nicht erkennbare zweite Rundsäule mit den zwei Lagern des Schittens 18 ist in der Zeichnungsebene hinter der dargestellten Welle 19 angeordnet.

Über einen unterhalb des Schlittens angeordneten Anschlag 45 wird die Zustellbewegung des Schlittens 18 in die Schneidbewegung überführt.

Weiterhin sind an dem Schlitten 18 Arretierelemente 21 befestigt, welche mit stationär angeordneten Arretierbolzen 22 zusammenwirken und mittels welchen der Scherbalken 16 durch das Arretieren des Schlittens 18 in Schneidstellung fixiert wird. Hierdurch wird eine Rückstellbewegung der Schere beim Beschneiden der Bandenden vermieden.

Unter Zustellbewegung wird die im wesentlichen geradlinige Bewegung des Schlittens 18 mit dem Scherbalken 16 entlang der Vertikalführung 19 und unter Scherbewegung die Schwenkbewegung des Scherbalkens 16 bei arretiertem Schlitten 18 verstanden. An seinem oberen Ende weist der Schlitten 18 einen Anschlag 23 auf, der die Schwenkbewegung des Scherbalkens 16 bei seiner Rückstellbewegung in die Oberlage (Fig. 1) der Schere begrenzt.

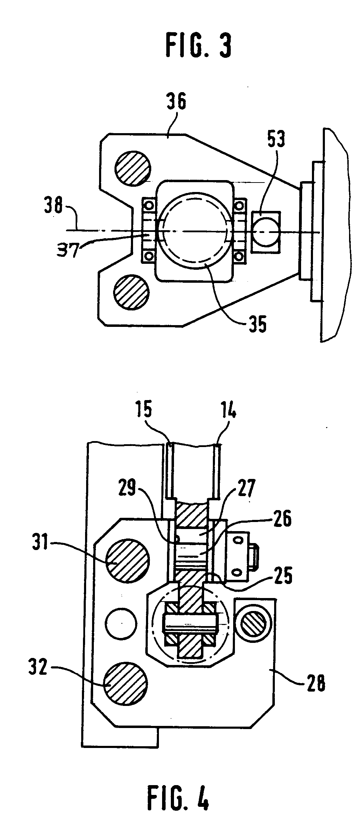

Die der Lagerseite 17 gegenüberliegende Seite 24 des Scherbalkens 16 ist über mindestens ein Führungselement 26 (Fig. 4), das durch eine Öffnung 27 des Scherbalkens 16 geführt ist, mit einem Führungsschlitten 28 (Fig. 1) verbunden. Der Führungsschitten 28 weist eine Führungsfläche 29 auf, an der der Scherbalken 16 so anliegt, daß eine Relativbewegung zwischen dem Scherbalken 16 und dem Führungsschlitten 28 möglich ist. Hierzu ist die Öffnung 27 in ihren Abmessungen größer als das durch sie hindurchgeführte und mit der Führungsfläche 29 des Führungsschlittens 28 verbundene Führungselement 26. Dieses weist ebenfalls eine Führungsfläche 25 auf. Der Führungsschlitten 28 ist an einer aus zwei hintereinander angeordneten Rundsäulen bestehenden Vertikalführung 30 höhenverschiebbar angeordnet und weist hierzu zwei Lager 31, 32 auf. An dem Führungsschlitten 28 ist ein Zuganker 48 (Fig. 2) angeordnet. Der Zuganker 48 besteht im wesentlichen aus einer Säule 52, die ein pilzförmiges, nach unten (Pfeilrichtung 49) gerichtetes Arretierelement 50 und eine am entgegengesetzten Ende angeordnete Ankerplatte 53, aufweist. Die Säule 52 liegt mit einem daran befestigten Bund 46 auf dem Führungsschlitten lose auf. Sie erstreckt sich über den Bund 46 hinaus durch die in einem über dem Führungsschlitten 28 angeordneten Oberjoch 36 vorhandene Bohrung 54 bis zu einer Gesamtlänge, die von einer Aufnahmevorrichtung 51 bis zur Oberseite des Oberjoches 36 reicht. Während der Zustellbewegung des Scherbalkens 16 wird der Zuganker 48 zu der Aufnahmevorrichtung 51 abgesenkt, in welcher das Arretierelement 50 einrastet bzw. verriegelt und gleichzeitig nach unten (Pfeilrichtung 49) gezogen wird. Dabei wird die Ankerplatte 53 in kraftschlüssiger Verbindung auf die Oberseite des Oberjoches 36 gebracht, während der Führungsschlitten 28 auf der Säule 52 des Zugankers 48 bis zum Ende der Schneidbewegung weiterfährt.

An dem Arm 33 (Fig. 1) des Scherbalkens 16 ist die Druckgabel 34 des Stellzylinders 35 befestigt. Dieser selbst ist mit dem über dem Führungsschlitten 28 an der Vertikalführung 30 stationär angeordneten Oberjoch 36 verbunden. An dem Oberjoch 36 ist hierzu ein Schwenkzapfen 37 gelagert, mittels dem der Stellzylinder 35 um die Achse 38 schwenkbar ist.

Weiterhin ist an dem Oberjoch 36 eine Führungsschiene 39 für ein bevorzugt als Laserschweißkopf ausgebildetes Schweißwerkzeug 40 befestigt, mittels dem die beschnittenen Bandenden in bekannter Weise verbunden werden. Die Austrittsdüse 41 des Laserschweißkopfes ist in der Fig. 1 nur schematisch dargestellt.

Die Funktionsweise der Vorrichtung wird nachstehend erläutert:
Zum Beginn des Schneidvorganges werden zunächst die zu verbindenden Bandenden über an sich bekannte Vorrichtungen zueinander positioniert, so daß die beiden Bandenden die stationär vorgesehenen Gegenschneidmesser 42 überragen. Danach wird mittels des einzigen Stellzylinders 35 in einem durchgehenden Bewegungsablauf die Zustell- und die Schneidbewegung ausgeführt, wobei der Schlitten 18 und der Führungsschlitten 28 mit dem Scherbalken 16 entlang der Vertikalführungen 19, 30 in Richtung der Gegenmesser 42 verstellt werden.

Vor dem Erreichen der Schneidstellung wird der Zuganker 48 in der Aufnahmevorrichtung 51 verriegelt und nach unten gezogen. Es entsteht nun ein rahmenförmiger Verbund über die Rundsäulen 30 und dem Oberjoch 36, der ein Aufbiegen der Rundsäulen aufgrund der Scherkräfte vorteilhaft verhindert.

Zum Fixieren des Schlittens 18 in Schneidstellung werden die Arretierbolzen 22 hydraulisch gesteuert in die Bohrung 43 der Arretierelemente 21 gesteckt, so daß der Scherbalken 16 durch die beim Schneiden auftretenden Scherkräfte nicht nach oben bewegt werden kann. Der Scherbalken 16 führt danach die Schneidbewegung aus, wobei durch die Führung des Scherbalkens 16 zwischen den Führungsflächen 25, 29 und der vorstehend beschriebenen Lagerung des Scherbalkens mit den Schermessern 13, 14 ein exakter Schnitt und damit genaue Schnittkanten der beiden Bandenden erreicht werden, wie sie für das anschließende Laserschweißen erforderlich sind. Bei dem gleichzeitigen Beschneiden der Bandenden kann der Scherbalken 16 aufgrund des Zwischenraumes zwischen dem Führungselement 26 und der Öffnung 27 die Schwenkbewegung ausführen. Hierbei schwenkt der Stellzylinder 35 um die Achse 38.

Nach dem Beschneiden wird durch Betätigung des Stellzylinders 35 der Scherbalken 16 in die Ausgangsposition zurückgefahren, wobei zuerst die Arretierbolzen 22 aus der Bohrung 43 der Arretierelemente 21 bewegt werden, dann die Schwenkbewegung des Scherbalkens 16 bei seiner Rückstellbewegung durch den Anschlag 23 begrenzt wird, und abschließend der Schlitten 18 mit dem Scherbalken 16 in die Oberlage der Schere verfahren wird. Gleichzeitig wird die bekannte, nicht näher dargestellte Schweißunterlage in die Schweißposition verfahren. Danach werden die Bandenden zueinander positioniert und vorzugsweise mit einem aus dem Laserschweißkopf 40 austretenden Laserstrahl verschweißt.

Durch die oben beschriebene und in den Zeichnungen dargestellte Bandschweißanlage wird somit eine Vorrichtung zum Beschneiden von zwei Bandenden geschaffen, die eine Schere mit großer Fensteröffnung 44 und einer frei zugänglichen Schweißvorrichtung aufweist. Der Zustell- und Schneidvorgang wird in einem einzigen, durchgehenden Bewegungablauf mit nur einem ansteuerbaren Stellzylinder ausgeführt. Hierdurch wird einerseits eine wesentliche Reduzierung des hydraulichen Aufwandes ermöglicht und andererseits eine wesentliche Verringerung der Schneidzykluszeit erreicht.

## Patentansprüche

1. Schere in einer Bandschweißanlage (10) mit einem eine gradlinige Zustellbewegung und eine Schneidbewegung ausführenden Scherbalken (16), an dem Schermesser (14,15) angeordnet sind,
wobei die Anlage (10) ein Gegenmesser (42) aufweist, und der Scherbalken (16) an einer Seite (17) auf einem Schlitten (18) schwenkbar gelagert ist und auf der gegenüberliegenden Seite (24) Vertikalführungen (30) und einen einzigen Stellzylinder (35) aufweist, dadurch gekennzeichnet ,daß mittels des einzigen Stellzylinders (35) in einem durchgehenden Bewegungsablauf die Zustell- und die Schneidbewegung ausgeführt wird, wobei der Schlitten (18) mit dem Scherbalken (16) entlang der Vertikalführungen (19, 30) in Richtung der Gegenmesser (42) verstellt wird und
daß Mittel (45) die Zustellbewegung des Schlittens (18) während der Bewegung des Stellzylinders (35) begrenzen.

2. Bandschweißanlage nach Anpsruch 1,
dadurch gekennzeichnet,
daß der Scherbalken (16) über voneinander beabstandete Lager (11, 12) entlang zweier Rundsäulen (19) verschiebbar ist.

3. Bandschweißanlage nach Anspruch 1 oder 2,
dadurch gekennzeichnet,
daß die beiden Schermesser (14, 15) jeweils zwei Segmente (15a, 15b) gleicher Länge aufweisen, die in einem stumpfen Winkel (13) angeordnet sind.

4. Bandschweißanlage nach einem der Ansprüche 1 bis 3,
dadurch gekennzeichnet,
daß an dem Schlitten (18) ein Anschlag (23) angeordnet ist, der die Schwenkbewegung des Scherbalkens (16) bei seiner Rückstellbewegung in eine Oberlage der Schere begrenzt.

5. Bandschweißanlage nach einem der Ansprüche 1 bis 4,
dadurch gekennzeichnet,
daß das Mittel (45) unterhalb des Schlittens (18) angeordnet und als Anschlag (45) ausgebildet ist und den Scherbalken von der Zustellbewegung in die Schneidbewegung überführt.

6. Bandschweißanlage nach einem der Ansprüche 1 bis 5,
dadurch gekennzeichnet,
daß an dem Schlitten (18) Arretierelemente (21) befestigt sind, denen stationär angeordnete Arretierbolzen (22) zugeordnet sind, mittels denen der Schlitten (18) in der Schneidstellung fixiert wird.

7. Bandschweißanlage nach einem der Ansprüche 1 bis 6,
dadurch gekennzeichnet,
daß der Lagerseite (17) des Scherbalkens (16) gegenüberliegend ein Oberjoch (36) an zwei Rundsäulen (30) angeordnet ist und an dem Oberjoch (36) ein die Zustell- und Schneidbewegung bewirkender Stellzylinder (35) schwenkbar gelagert ist.

8. Bandschweißanlage nach einem der Ansprüche 1 bis 7,
dadurch gekennzeichnet,
daß der Scherbalken (16) unterhalb des Oberjoches (36) mit einem entlang der Rundsäulen (30) verschiebbaren Führungsschlitten (28) verbunden ist, der eine Führungsfläche (29) aufweist, an der der Scherbalken (16) anliegt.

9. Bandschweißanlage nach einem der Ansprüche 1 bis 8,
dadurch gekennzeichnet,
daß der Scherbalken (16) mittels eines Führungselementes (26), das durch eine Öffnung (27) des Scherbalkens (16) geführt ist, so an der Führungsfläche (29) anliegt, daß eine Relativbewegung zwischen dem Scherbalken (16) und dem Führungsschlitten (28) möglich ist.

10. Bandschweißanlage nach einem der Ansprüche 1 bis 9,
dadurch gekennzeichnet,
daß an dem Führungsschlitten (28) ein Zuganker (48) gelagert ist, der während der Zustellbewegung in einer stationär angeordneten Aufnahmevorrichtung (51) mit einer nach unten (Pfeilrichtung 49) gerichteten Zugbewegung verriegelt wird.

11. Bandschweißanlage nach Anspruch 10,
dadurch gekennzeichnet,
daß der Zuganker (48) eine Ankerplatte (53) aufweist, die mittels der Zugbewegung in kraftschlüssiger Verbindung auf der Oberseite des Oberjoches (36) zur Anlage gebracht wird.

12. Bandschweißanlage nach einem der Ansprüche 1 bis 11,
dadurch gekennzeichnet,
daß an dem Oberjoch (36) eine Führungsschiene (39) für einen Laserschweißkopf (40) angeordnet ist.

## Claims

1. Shearing cutter in a band-welding plant (10), having a shearing bar (16), executing a rectilinear feed motion and a cutting motion, on which there are disposed shearing blades (14, 15), the plant (10) exhibiting a counter-blade (42) and the shearing bar (16) being pivotably mounted on one side (17) on a carriage (18) and exhibiting on the opposite side (24) vertical guides (30) and a single adjusting cylinder (35), characterised in that the feed and cutting motion is executed by means of the single adjusting cylinder (35) in a continuous motional sequence, the carriage (18) being shifted with the shearing bar (16) along the vertical guides (19, 30) in the direction of the counter-blades (42) and in that means (45) limit the feed motion of the carriage (18) during the movement of the adjusting cylinder (35).

2. Band-welding plant according to Claim 1, characterised in that the shearing bar (16) is displaceable, by means of spaced-apart mountings (11, 12), along two circular columns (19).

3. Band-welding plant according to Claim 1 or 2, characterised in that the two shearing blades (14, 15) respectively exhibit two segments (15a, 15b) of identical length, which are disposed at an obtuse angle (13).

4. Band-welding plant according to one of Claims 1 to 3, characterised in that on the carriage (18) there is disposed a stop (23), which limits the pivot motion of the shearing bar (16) in its return movement into an upper location of the shearing cutter.

5. Band-welding plant according to one of Claims 1 to 4, characterised in that the means (45) are disposed beneath the carriage (18) and are configured as a stop (45) and transfer the shearing bar from the feed motion into the cutting motion.

6. Band-welding plant according to one of Claims 1 to 5, characterised in that fastened to the carriage (18) there are retaining elements (21) to which there are assigned fixed-position retaining pins (22) by means of which the carriage (18) is fixed in the cutting position.

7. Band-welding plant according to one of Claims 1 to 6, characterised in that opposite the mounting side (17) of the shearing bar (16) there is disposed, on two circular columns (30), an upper yoke (36) and on the upper yoke (36) there is pivotably mounted an adjusting cylinder (35) effecting the feed and cutting motion.

8. Band-welding plant according to one of Claims 1 to 7, characterised in that the shearing bar (16) is connected beneath the upper yoke (36) to a guide carriage (28), which is displaceable along the circular columns (30) and exhibits a guide surface (29) against which the shearing bar (16) bears.

9. Band-welding plant according to one of Claims 1 to 8, characterised in that the shearing bar (16) bears by means of a guide element (26), which is guided through an opening (27) in the shearing bar (16), against the guide surface (29) in such a way that a relative movement between the shearing bar (16) and the guide carriage (28) is possible.

10. Band-welding plant according to one of Claims 1 to 9, characterised in that on the guide carriage (28) there is mounted a tie rod (48), which, during the feed motion, is locked in a fixed-position receiving device (51) by a downwardly directed (arrow direction 49) traction motion.

11. Band-welding plant according to Claim 10, characterised in that the tie rod (48) exhibits an anchoring plate (53), which is brought to bear by means of the traction motion, in non-positive connection, upon the top side of the upper yoke (36).

12. Band-welding plant according to one of Claims 1 to 11, characterised in that on the upper yoke (36) there is disposed a guide rail (39) for a laser welding head (40).

## Revendications

1. Installation de soudage de bandes (10) avec une poutre (16) effectuant un mouvement de positionnement rectiligne et un mouvement de coupe, cette poutre portant les couteaux (14, 15) de la cisaille,
l'installation (10) comportant un contre-couteau (42) et la poutre de cisaillement (16) étant montée pivotante sur un chariot (18) par un côté (17) et le côté opposé (24) ayant des guides verticaux (30) et un seul vérin de manoeuvre (35), caractérisée en ce que l'unique vérin de manoeuvre (35) exécute au cours d'un mouvement continu, le mouvement de positionnement et le mouvement de coupe, le chariot (18) et la poutre de cisaillement (16) se déplaçant le long de guides verticaux (19, 30) en direction des contre-couteaux (42), des moyens (45) étant prévus pour limiter le mouvement de positionnement du chariot (18) pendant le mouvement du vérin de manoeuvre (35).

2. Installation de soudage de bandes selon la revendication 1, caractérisée en ce que la poutre de cisaillement (16) est coulissante par des paliers (11, 12) écartés l'un de l'autre le long de deux colonnes circulaires (19).

3. Installation de soudage de bandes selon la revendication 1 ou 2, caractérisée en ce que les deux couteaux de cisaille (14, 15) ont chaque fois deux segments (15a, 15b) de même longueur qui font entre eux un angle obtus (13).

4. Installation de soudage de bandes selon l'une des revendications 1 à 3, caractérisée par une butée (23) prévue sur le chariot (18) qui limite le mouvement de pivotement de la poutre de cisaillement (16) au cours de son mouvement de retour en position haute de la cisaille.

5. Installation de soudage de bandes selon l'une des revendications 1 à 4, caractérisée par des moyens (45) prévus sur le chariot (18) et constitués en forme de butées (45) pour faire passer la poutre de cisaille de son mouvement de positionnement à son mouvement de coupe.

6. Installation de soudage de bandes selon l'une des revendications 1 à 5, caractérisée en ce que des éléments de blocage (21) sont fixés sur le chariot (18) auquel sont associés des goujons de blocage (22) fixes qui permettent de bloquer le chariot (18) en position de coupe.

7. Installation de soudage de bandes selon l'une des revendications 1 à 6, caractérisée en ce que en regard du côté de montage (17) de la poutre de cisaillement (16), se trouve un étrier supérieur (36) monté sur deux colonnes circulaires (30) et un vérin de manoeuvre (35) est monté articulé sur l'étrier supérieur (36) pour commander le mouvement de positionnement et de coupe.

8. Installation de soudage de bandes selon l'une des revendications 1 à 7, caractérisée en ce que la poutre de cisaillement (16) est reliée à des chariots de guidage (28) coulissant sous l'étrier supérieur (36) le long des colonnes circulaires (30), ce chariot ayant une surface de guidage (29) contre laquelle s'appuie la poutre de cisaillement (16).

9. Installation de soudage de bandes selon l'une des revendications 1 à 8, caractérisée en ce que la poutre de cisaillement (16) est guidée par un élément de guidage (26) traversant une ouverture (27) de la poutre (16) pour s'appuyer contre la surface de guidage (29) et permettre un mouvement relatif entre la poutre de cisaillement (16) et le chariot de guidage (28).

10. Installation de soudage de bandes selon l'une des revendications 1 à 9, caractérisée par un tirant (48) porté par le chariot de guidage (28) qui, pendant le mouvement de positionnement est verrouillé dans un dispositif de réception (51) fixe, avec un mouvement de traction dirigé vers le bas (direction de la flèche 49).

11. Installation de soudage de bandes selon la revendication 10, caractérisée en ce que le tirant (48) comporte une plaque (53) qui vient en appui sur la face supérieure de l'étrier supérieur (36) suivant une liaison de force, du fait du mouvement de traction.

12. Installation de soudage de bandes selon l'une des revendications 1 à 11, caractérisée par un rail de guidage (39) pour la tête de soudage à laser (40) sur l'étrier supérieur (36).
